# EUROPEAN PATENT APPLICATION

(11) **EP 2 669 563 A1**
(43) Date of publication of application: **04.12.2013**
(21) Application number: 12170438.1
(22) Date of filing: 01.06.2012
(51) Int. Cl.: F16L 37/088

(54) **Pipe connector**

(71) Applicant: Uponor Innovation AB, 73061 Virsbo (SE)
(72) Inventor: Savolainen, Mika, 15561 Nastola (FI); Rotso, Vesa, 15561 Nastola (FI)
(74) Representative: Papula Oy

(57) **Abstract**

A pipe connector (3) comprises a connector body (4) having a fitting nipple (5) onto which an end (2') of a pipe (2) to be connected is to be pushed. The pipe connector further comprises a clamping ring (8) surrounding the fitting nipple (5) and having a wall (9) comprising a slot (10) running between axial ends (9', 9") of the wall (9), which slot (10) is delimited by opposing flanks (11, 12) of the wall (9). The pipe connector further comprises a spacer (17) arranged in the slot (10) between the opposing flanks (11, 12) of the wall (9) of the clamping ring (8) to keep the clamping ring (8) in an expanded state, and an outer collar (13) surrounding the fitting nipple (5) and the clamping ring (8) and comprising at least one through-hole (18) at the area of the clamping ring (8) for accessing the slot (10) in the clamping ring (8).

## Description

### FIELD OF THE INVENTION

The present invention relates to a pipe connector.

### BACKGROUND OF THE INVENTION

Pipe connectors may be used for connecting pipes, such as pipes for service water in households, for example to a location of use of water, or for providing branching points in a water supply system.

One typical way to attach a pipe to a pipe connector is to use a clamp fitting which provides a compression fitting between a fitting nipple in the pipe connector and an end of the pipe to be connected to the pipe connector. A known clamp fitting comprises a clamping ring surrounding the fitting nipple and having a wall comprising a slot running between axial ends of the wall, whereby the slot is delimited by opposing flanks of the wall of the clamping ring. The clamp fitting further comprises a spacer arranged in the slot between the opposing flanks of the wall of the clamping ring to keep the clamping ring in an expanded state before the pipe is connected to the pipe connector. When the pipe is connected to the pipe connector, the end of the pipe is pushed around the fitting nipple, between the fitting nipple and the clamping ring. The end of the pipe pushes the spacer away from the slot in the clamping ring, whereby the clamping ring contracts around the end of the pipe for providing a compression fitting between the fitting nipple and the end of the pipe. This kind of clamp fitting is presented for example in EP 1122485 A2, EP 1662190 A2 or WO 2008/148728 A1.

### BRIEF DESCRIPTION OF THE INVENTION

An object of the present invention is to provide a new type of a pipe connector.

A pipe connector according to an invention comprises
a connector body having at least one fitting nipple onto which an end of a pipe to be connected is to be pushed,
at least one clamping ring surrounding the fitting nipple and having a wall comprising a slot running between axial ends of the wall, the slot being delimited by opposing flanks of the wall,
at least one spacer arranged in the slot between the opposing flanks of the wall of the clamping ring to keep the clamping ring in an expanded state, and
at least one outer collar surrounding the fitting nipple and the clamping ring and comprising at least one through-hole at the area of the clamping ring for accessing the slot in the clamping ring,
wherein the end of the pipe is arranged to remove the spacer from the slot in the clamping ring when the pipe is connected to the fitting nipple by pushing the end of the pipe between the fitting nipple and the clamping ring, whereby the clamping ring is arranged to contract around the end of the pipe for providing a compression fitting between the fitting nipple and the end of the pipe, and
wherein a tool is to be inserted through the through-hole in the outer collar into the slot in the clamping ring for moving the opposing flanks of the wall of the clamping ring away from each other for opening the compression fitting between the fitting nipple and the end of the pipe.

A tool intended to be used with the pipe connector comprises an elongated body, a handle at one end of the body and an opening head at the other end of the body, which opening head is to be inserted through the through-hole in the outer collar into the slot in the clamping ring for opening the compression fitting between the fitting nipple and the end of the pipe.

A method in connection with a pipe connector comprises inserting an opening head of a tool through the through-hole in the outer collar into the slot in the clamping ring and turning the tool in relation to the pipe connector for moving the opposing flanks of the wall of the clamping ring away from each other for opening the compression fitting between the fitting nipple and the end of the pipe.

A pipe connector thus comprises a connector body having at least one fitting nipple onto which an end of a pipe to be connected is to be pushed, at least one clamping ring surrounding the fitting nipple and having a wall comprising a slot running between axial ends of the wall, the slot being delimited by opposing flanks of the wall, at least one spacer arranged in the slot between the opposing flanks of the wall of the clamping ring to keep the clamping ring in an expanded state, and at least one outer collar surrounding the fitting nipple and the clamping ring and comprising at least one through-hole at the area of the clamping ring for accessing the slot in the clamping ring. When connecting the pipe with the pipe connector, the end of the pipe is arranged to remove the spacer from the slot in the clamping ring when the pipe is connected to the fitting nipple by pushing the end of the pipe between the fitting nipple and the clamping ring, whereby the clamping ring is arranged to contract around the end of the pipe for providing a compression fitting between the fitting nipple and the end of the pipe. Furthermore, a tool is to be inserted through the through-hole in the outer collar into the slot in the clamping ring for moving the opposing flanks of the wall of the clamping ring away from each other for opening the compression fitting between the fitting nipple and the end of the pipe, whereby the pipe may be disconnected from the pipe connector.

An easy access to the slot in the clamping ring may be provided by a through-hole in the outer collar of the pipe connector so that the clamping ring may be brought into an expanded state for opening the compression fitting between the fitting nipple and the pipe after the pipe has been connected to the pipe connector. A need to disconnect the pipe from the pipe connector may arise if for example a fluid leakage occurs in the pipe connection so that either the pipe or the pipe connector should be replaced.

Some different embodiments of the invention are disclosed in the dependent claims.

### BRIEF DESCRIPTION OF THE DRAWINGS

In the following, the invention will be described in greater detail by means of preferred embodiments with reference to the accompanying drawings, in which
Figure 1 is a schematic top view of a pipe connection,
Figure 2 is a schematic cross-sectional side view of the pipe connection of Figure 1 when a clamping ring of a pipe connector is in a closed position;
Figure 3 is a schematic cross-sectional end view of the pipe connection of Figure 2;
Figure 4 is a schematic top view of a portion of a clamping ring when the clamping ring is in a closed position;
Figure 5 is a schematic top view of a portion of the clamping ring of Figure 4 in an expanded state before the pipe has been connected to the pipe connector;
Figure 6 is a schematic cross-sectional side view of the pipe connection of Figure 1 when the clamping ring is in an open position;
Figure 7 is a schematic cross-sectional end view of the pipe connection of Figure 6;
Figure 8 is a schematic top view of a portion of the clamping ring when the clamping ring is in an open position;
Figure 9 is a schematic bottom view of a tool intended to be used for opening the pipe connection;
Figure 10 is a schematic front view of the tool of Figure 9, and
Figure 11 is a schematic side view of the tool of Figure 9.

For the sake of clarity, some embodiments of the invention are simplified in the figures. Like reference numerals identify like elements.

### DETAILED DESCRIPTION OF THE INVENTION

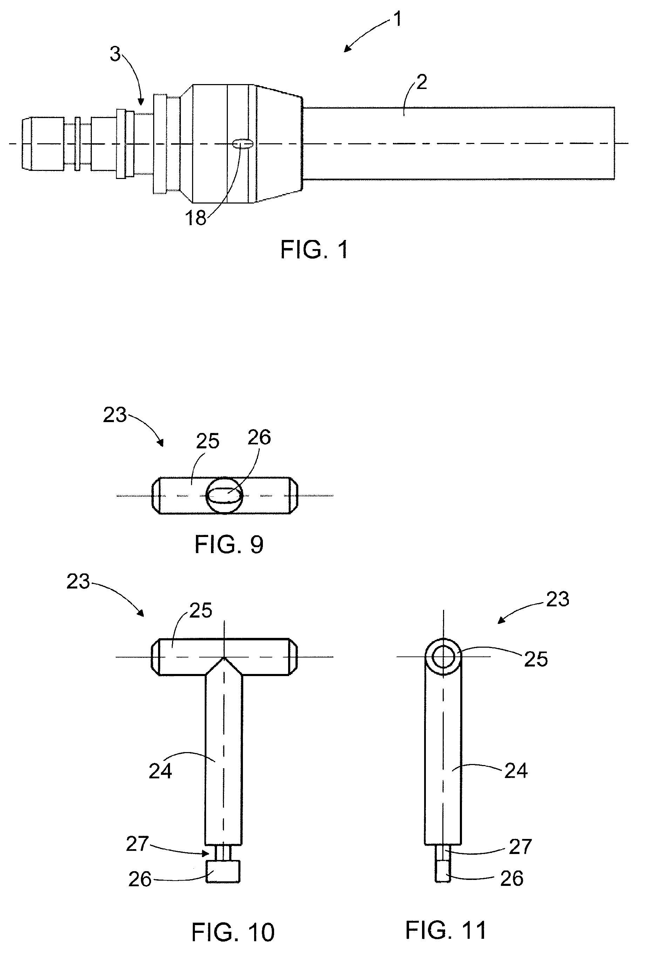

Figure 1 is a schematic top view of a pipe connection 1 comprising a pipe connector 3 and a pipe 2 attached to the pipe connector 3. The pipe 2 may for example be a plastic pipe or a plastic-metal composite pipe and it may be used for supplying different fluids, such as water, in households. Pipe connectors 3, in turn, are typically used for connecting pipes to a location of use of a fluid supplied in the pipes 2 or for providing branching points in the fluid supply systems.

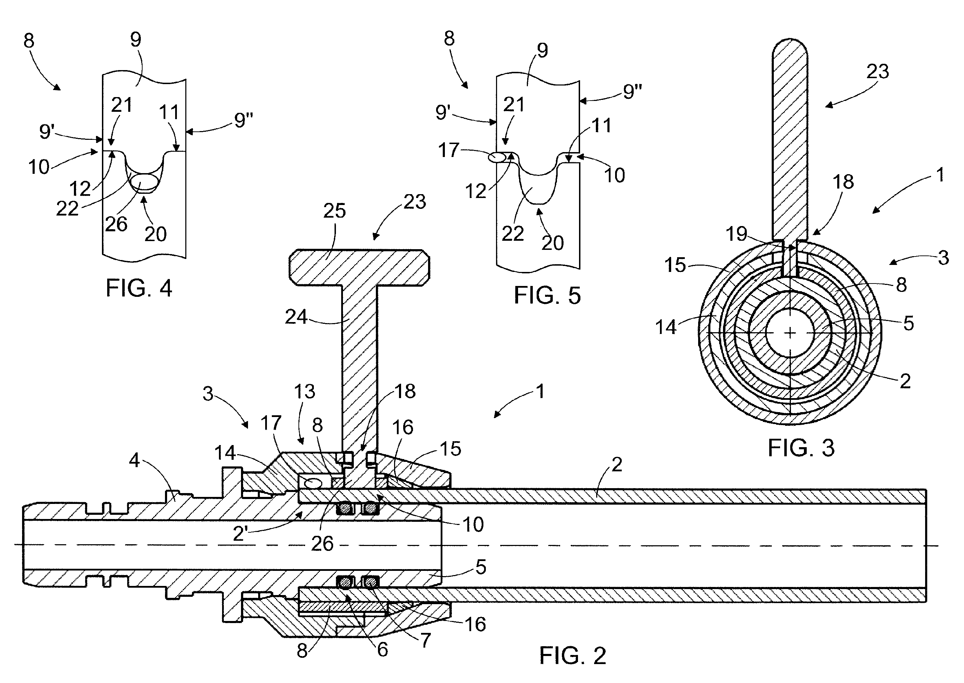

Figure 2 is a schematic cross-sectional side view of the pipe connection 1 of Figure 1, when a clamping ring 8 of the pipe connector 3 is in a closed position, Figure 3 is a schematic cross-sectional end view of the pipe connection 1 shown in Figure 2, and Figure 4 is a schematic top view of a portion of the clamping ring 8 when the clamping ring 8 is in a closed position. Figure 5, in turn, is a schematic top view of a portion of the clamping ring 8 shown in Figure 4 when the clamping ring 8 is in an expanded state before the pipe 2 has been connected to the pipe connector 3.

Referring first to Figures 2, 3, and 4, the pipe connector 3 comprises a connector body 4 having a fitting nipple 5 onto which an end 2' of the pipe 2 has been connected. Depending on the embodiment of the pipe connector 3, the number of fitting nipples may vary. In the embodiment of Figure 2, the connector body 4 and the fitting nipple 5 are an integrated piece but they could also be separate parts attached to each other. The connector body 4 and the fitting nipple 5 may for example be made of a plastic material, such as polypropylene PP, polyamide PA, fibre reinforced cross-linked polyethylene PEX, polyphenylsulfone PPSU, polysulfone PSU, polyphenylene sulphide PPS, polyvinyl chloride PVC or brass or other plastic or metal material.

For tightening the fitting between the pipe connector 3 and the pipe 2 at least one sealing ring may be arranged between the fitting nipple 5 and the end 2' of the pipe 2. In the embodiment shown in the figures the fitting nipple 5 of the pipe connector 3 further comprises two circumferential grooves 6 in the outer circumference of the fitting nipple 5 and O-ring seals 7 arranged in the grooves 6 for tightening the connection between the fitting nipple 5 and the pipe 2. Depending on the embodiment of the pipe connector 3, the number of grooves 6 and O-ring seals 7 may vary.

The pipe connector 3 further comprises a clamping ring 8 surrounding the fitting nipple 5 and an outer collar 13 surrounding the fitting nipple 5 and the clamping ring 8. The clamping ring 8 comprises a wall 9 which comprises a slot 10 running between axial ends 9', 9" of the wall 9. The slot 10 is delimited by opposing flanks 11 and 12 of the wall 9. The outer collar 13 comprises a first portion 14 and a second portion 15 attached to each other. The first portion 14 of the outer collar 13 is directed away from the pipe 2 and the second portion 15 of the outer collar 13 is directed towards the pipe 2. The outer collar 13 is supported against the connector body 4 of the pipe connector 3 in such a way that the outer collar 13 may be turned about the fitting nipple 5 and the clamping ring 8 in the circumferential direction thereof. The clamping ring 8 may be made of a high carbon steel spring and the outer collar 13 may be made of a plastic material, such as polypropylene PP, polyamide PA, fibre reinforced cross-linked polyethylene PEX, polyphenylsulfone PPSU, polysulfone PSU, polycarbonate PC or acrylonitrile butadiene styrene ABS.

In the embodiment of Figure 2 and in the position of the pipe connector 3 as seen in Figure 2, the clamping ring 8 has a asymmetrical structure such that the width of the wall 9 of the clamping ring 8, i.e. the distance between the axial ends 9', 9" of the wall 9, is larger in the lower part of the pipe connector 3 than in the upper part of the pipe connector 3 where the slot 10 of the clamping ring 8 is located. In the circumferential direction of the outer collar 13, the inner circumference of the first portion 14 of the outer collar 13 may comprise blocking elements which prevent free rotation of the clamping ring 8 by utilizing the asymmetrical structure of the clamping ring 8. This means that the clamping ring 8 may not rotate about the fitting nipple 5 above 360 degrees but that the clamping ring 8 may rotate somewhat about the fitting nipple 5, for example 0 to 90 degrees, whereby the location of the slot 10 of the clamping ring 8 in the pipe connector 3 is controllable. In an axial direction of the fitting nipple 5, the clamping ring 8 is supported against the first portion 14 of the outer collar 13 at the lower part of the pipe connector 3 and against a second portion 15 of the outer collar 13 through a pipe locking sleeve 16, which prevent pipe 2 from coming out when the clamping ring 8 has compressed on the pipe 2.

Referring now to Figure 5, in an initial state of the clamping ring 8, before the end 2' of the pipe 2 is connected to the fitting nipple 5 of the pipe connector 3, a spacer 17 is arranged in the slot 10 between the opposing flanks 11, 12 of the wall 9 of the clamping ring 8 to keep the clamping ring 8 in an expanded state so that the pipe connector 3 is able to receive the end 2' of the pipe 2. In the expanded state of the clamping ring 8, an open space is provided between the inner circumference of the clamping ring 8 and the outer circumference of the fitting nipple 5. The spacer 17 may be made or plastic or metal, for example.

When the pipe 2 is connected to the pipe connector 3, the end 2' of the pipe 2 is pushed towards the fitting nipple 5, whereby the end 2' of the pipe 2 encircles the fitting nipple 5. As the pipe 2 is pushed forward towards the pipe connector 3, the end 2' of the pipe 2 enters the open space between the outer circumference of the fitting nipple 5 and the inner circumference of the clamping ring 8 which is in the expanded state owing to the presence of the removable spacer 17 between the opposing flanks 11, 12 of the wall 9 of the clamping ring 8. When the pipe 2 is pushed forward towards the pipe connector 3, the end 2' of the pipe 2 removes the spacer 17 from the slot 10 of the clamping ring 8, whereby the clamping ring 8 contracts around the end 2' of the pipe 2 and provides a compression fitting between the fitting nipple 5 and the end 2' of the pipe 2, thus providing a connection between the pipe connector 3 and the pipe 2. The spacer 17 removed from its original position is shown schematically in Figure 2. If the first portion 14 of the outer collar 13 is made of a transparent material, the presence of the connection between the pipe connector 3 and the pipe 2 may be verified by looking through the first portion 14 of the outer collar 13 and seeing that the spacer 17 no longer resides in the slot 10 of the clamping ring 8.

The outer collar 13 of the pipe connector 2 comprises a through-hole 18 at the area of the clamping ring 8. The through-hole 18 comprises edges 19. The through-hole 18 provides access to the slot 10 of the clamping ring 8 so that a tool 23 may be inserted through the through-hole 18 into the slot 10 for opening the compression fitting between the fitting nipple 5 and the end 2' of the pipe 2 by moving the opposing flanks 11, 12 of the wall 9 of the clamping ring 8 away from each other. The through-hole 18 has a certain size and shape. In the embodiment of the figures, the through-hole 18 has the shape of an ellipse so that a larger dimension of the ellipse is arranged in the axial direction of the fitting nipple 5 and a smaller dimension of the ellipse is arranged in a direction transverse to the axial direction of the fitting nipple 5. The shape of the through-hole may also have a shape of rectangular of other type of parallelogram, for example a shape of a flattened hexagon.

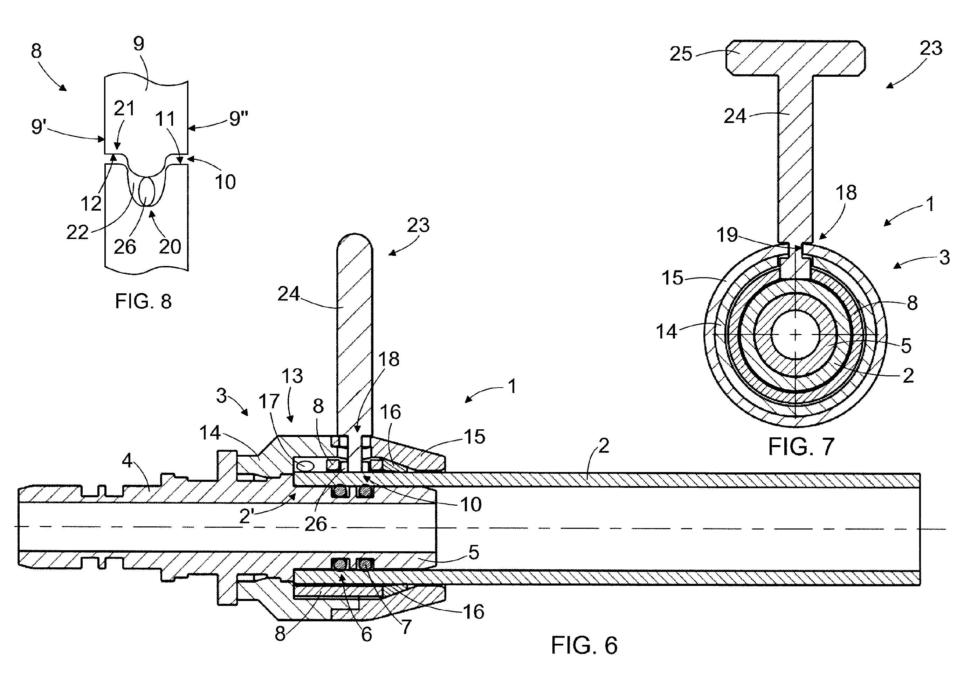

The slot 10 in the clamping ring 8, in turn, comprises in a middle part of the wall 9 in an axial direction of the clamping ring 8 a first portion 20 of the slot 10 wherein the flanks 11, 12 of the wall 9 of the clamping ring 8 are more distant from each other than in neighbouring second portions 21 of the slot. The opposing flanks 11, 12 of the wall 9 of the clamping ring 8 in the first portion 20 of the slot 10 determine a receiving area 22 for receiving the tool 23 for opening the compression fitting between the fitting nipple 5 and the end 2' of the pipe 2. When the compression fitting between the fitting nipple 5 and the end 2' of the pipe 2 is opened, the end 2' of the pipe 2 may be pulled away from the pipe connector 3 for disconnecting the pipe 2 from the pipe connector 3. Figure 6 is a schematic cross-sectional side view of the pipe connection 1 when the clamping ring 8 is in an open position, Figure 7 is a schematic cross-sectional end view of the pipe connection 1 of Figure 6, and Figure 8 is a schematic top view of a portion of the clamping ring 8 when the clamping ring 8 is in an open position.

A tool 23 which may be used for opening the connection between the pipe connector 3 and the pipe 2 is shown schematically in Figures 9, 10, and 11. Figure 9 is a schematic bottom view of the tool 23, Figure 10 is a schematic front view of the tool 23 of Figure 9, and Figure 11 is a schematic side view of the tool 23 of Figure 9.

The tool 23 comprises an elongated body 24, a handle 25 at one end of the body 24, and an opening head 26 at the other end of the body 24. The size and shape of the opening head 26 of the tool 23 according to Figures 9 to 11 correspond to the size and shape of the through-hole 18 in the outer collar 13 of the pipe connector 3. Thus, the shape of the opening head 26 of the tool 23 is an ellipse having the same size as the size of the through-hole 18 so that the opening head 26 of the tool 23 may enter the receiving area 22 in the slot 10 of the clamping ring 8 through the through-hole 18. Next to the opening head 26 of the tool 23 the body 24 of the tool 23 comprises a necking portion 27 having a reduced cross-section when compared with the cross-section of the opening head 26 and the other portion of the body 24 of the tool 23.

Referring to Figures 2 to 4 and 6 to 11, when the compression fitting between the fitting nipple 5 and the end 2' of the pipe 2 is to be opened, the opening head 26 of the tool 23 is inserted through the through-hole 18 in the outer collar 13 into the receiving area 22 in the slot 10 of the clamping ring 8. This is shown schematically in Figures 2, 3, and 4. If in circumferential directions of the outer collar 13 and the clamping ring 8 the positions of the through-hole 18 and the slot 10 in the clamping ring 8 do not coincide, the outer collar 13 may be turned about the clamping ring 4 so that the positions of the through-hole 18 and the slot 10 in the clamping ring 8 will coincide. When the opening head 26 of the tool 23 is inserted through the through-hole 18, the position of the opening head 26 of the tool 23 is thus parallel to the position of the through-hole 18. At this stage, the opening head 26 of the tool 23 is in the receiving area 22 of the slot 10 but the clamping ring 8 is still in the contracted state around the end 2' of the pipe 2.

At the next stage, the tool 23 is turned in relation to the pipe connector 3, whereby the opening head 26 of the tool 23 turns in the receiving area 22 of the slot 10 in the clamping ring 8. The turning angle may for example be 90 degrees as shown in Figures 6 to 8 when compared with Figures 2 to 4. At this stage, the direction of a larger dimension of the opening head 26 of the tool 23 is transverse to the direction of a larger dimension of the through-hole 18 and the edges 19 of the through-hole 18 have entered the necking portion 27 so that the tool 23 may not be removed from the through-hole 18 by accident. As the opening head 26 of the tool 23 turns in the receiving area 22 in the slot 10, the opening head 26 of the tool 23 moves the opposing flanks 11, 12 of the wall 9 of the clamping ring 8 away from each other, thus bringing the clamping ring 8 into the expanded state and opening the compression fitting between the fitting nipple 5 and the end 2' of the pipe 2. When the compression fitting between the fitting nipple 5 and the end 2' of the pipe 2 is thus opened, the pipe 2 may be disconnected from the pipe connector 3. The opening head 26 of the tool 23 keeps or locks the clamping ring 8 in the open position when the edges 19 of the through-hole 18 have entered the necking portion 27 so that the tool 23 may not be removed from the through-hole 18. When the clamping ring 8 is in this open position, an end of a new pipe, for example, may be pushed around the fitting nipple 5. The clamping ring 8 remains in this open position until the tool 23 is turned backwards for allowing the opposing flanks 11, 12 of the wall 9 of the clamping ring 8 to move towards each other, whereby the clamping ring 8 contracts again to the closed position and provides the compression fitting between the fitting nipple 5 and the pipe 2 pushed around the fitting nipple 5.

The through-hole 18 in the outer collar 13 thus provides an easy access to the slot 10 in the clamping ring 8 so that the clamping ring 8 may be brought again into an expanded state for opening the compression fitting between the fitting nipple 5 and the pipe 2 after the pipe 2 has already been connected to the pipe connector 2. A need to open the compression fitting between the fitting nipple 5 and the pipe 2 may arise if a fluid leakage occurs in the pipe connection and either the pipe 2 or the pipe connector 3 should be replaced. And because the fitting provided by the clamping ring 8 may be reopened and further reclosed repeatedly, the pipe connector 3 is reusable.

It will be obvious to a person skilled in the art that, as technology advances, the inventive concept can be implemented in various ways. The invention and its embodiments are not limited to the examples described above but may vary within the scope of the claims. Therefore, the mutual sizes and shapes of the through-hole 18 and the opening head 26 of the tool 23 may vary in various ways as long as the opening head 26 of the tool 23 may enter the receiving area 22 in the slot 10 of the clamping ring 8 through the through-hole 18. Also the mutual sizes and shapes of the receiving area 22 and the opening head 26 of the tool 23 may vary in various ways as long as the opening head 26 of the tool 23 may enter the receiving area 22 and may bring the clamping ring into an expanded state when the opening head 26 turns in the receiving area 22 relative to the opposing flanks 11, 12 of the slot 10 defining the receiving area 22. Thus, the through-hole 18 and the opening head 26 of the tool 23 may be of the same size or the size of the opening head 26 of the tool 23 may be smaller than the size of the through-hole 18. The through-hole 18 and the opening head 26 of the tool 23 may be of the same shape, as shown in the figures, or they may have a different shape. The through-hole 18 may for example be round and the opening head 26 of the tool 23 may have the form of a rectangle or a rectangle having rounded corners or another form which is rotationally non-symmetrical, for example.

## Claims

1. A pipe connector (3) comprising
a connector body (4) having at least one fitting nipple (5) onto which an end (2') of a pipe (2) to be connected is to be pushed,
at least one clamping ring (8) surrounding the fitting nipple (5) and having a wall (9) comprising a slot (10) running between axial ends (9', 9") of the wall (9), the slot (10) being delimited by opposing flanks (11, 12) of the wall (9),
at least one spacer (17) arranged in the slot (10) between the opposing flanks (11, 12) of the wall (9) of the clamping ring (8) to keep the clamping ring (8) in an expanded state, and
at least one outer collar (13) surrounding the fitting nipple (5) and the clamping ring (8) and comprising at least one through-hole (18) at the area of the clamping ring (8) for accessing the slot (10) in the clamping ring (8),
wherein the end (2') of the pipe (2) is arranged to remove the spacer (17) from the slot (10) in the clamping ring (8) when the pipe (2) is connected to the fitting nipple (5) by pushing the end (2') of the pipe (2) between the fitting nipple (5) and the clamping ring (8), whereby the clamping ring (8) is arranged to contract around the end (2') of the pipe (2) for providing a compression fitting between the fitting nipple (5) and the end (2') of the pipe (2), and
wherein a tool (23) is to be inserted through the through-hole (18) in the outer collar (13) into the slot (10) in the clamping ring (8) for moving the opposing flanks (11, 12) of the wall (9) of the clamping ring (8) away from each other for opening the compression fitting between the fitting nipple (5) and the end (2') of the pipe (2).

2. A pipe connector according to claim 1, wherein the slot (10) in the clamping ring (8) comprises at least one first portion (20) in which the flanks (11, 12) of the wall (9) of the clamping ring (8) are more distant from each other than in at least one second portion (21) of the slot (10), whereby the opposing flanks (11, 12) of the wall (9) in the first portion (20) of the slot (10) are arranged to determine a receiving area (22) for receiving the tool (23) for opening the compression fitting between the fitting nipple (5) and the end (2') of the pipe (2).

3. A pipe connector according to claim 1 or 2, wherein a dimension of the through-hole (18) in the outer collar (13) of the pipe connector (3) is larger in an axial direction of the fitting nipple (5) than in a direction transverse to the axial direction of the fitting nipple (5).

4. A pipe connector according to claim 3, wherein the through-hole (18) in the outer collar (13) of the pipe connector (3) has the form of an ellipse.

5. A pipe connector according to any one of the preceding claims, wherein the outer collar (13) is arranged to be able to turn relative to the clamping ring (8) in a circumferential direction of the clamping ring (8).

6. A pipe connector according to any one of the preceding claims, wherein at least a portion of the outer collar (13) surrounding the clamping ring (8) is made of a transparent material.

7. A pipe connector according to any one of the preceding claims, wherein the connector body (4), the fitting nipple (5) and the outer collar (13) are made of a plastic material.

8. A pipe connector according to any one of the preceding claims, wherein the pipe connector (3) comprises at least one circumferential groove (6) in an outer circumference of the fitting nipple (5) and at least one O-ring seal (7) arranged in the groove (6).

9. A pipe connector according to any one of the preceding claims, wherein the clamping ring (8) is made of a high carbon steel spring.

10. A tool (23) for a pipe connector (3) according to any one of claims 1 to 9, wherein the tool (23) comprises an elongated body (24), a handle (25) at one end of the body (24), and an opening head (26) at the other end of the body (24), which opening head (26) is to be inserted through the through-hole (18) in the outer collar (13) into the slot (10) in the clamping ring (8) for opening the compression fitting between the fitting nipple (5) and the end (2') of the pipe (2).

11. A tool according to claim 10, wherein the size and shape of the opening head (26) of the tool (23) correspond to the size and shape of the through-hole (18) in the outer collar (13) of the pipe connector (3).

12. A tool according to claim 10 or 11, wherein the body (24) of the tool (23) comprises next to the opening head (26) a necking portion (27) so that an edge (19) of the through-hole (18) in the outer collar (13) is arranged to enter the necking portion (27) when the tool (23) is turned relative to the pipe connector (3) for opening the compression fitting between the fitting nipple (5) and the end (2') of the pipe (2).

13. A method in connection with a pipe connector (3) comprising
a connector body (4) having at least one fitting nipple (5) onto which an end (2') of a pipe (2) to be connected is to be pushed,
at least one clamping ring (8) surrounding the fitting nipple (5) and having a wall (9) comprising a slot (10) running between axial ends (9', 9") of the wall (9), the slot (10) being delimited by opposing flanks (11, 12) of the wall (9),
at least one spacer (17) arranged in the slot (10) between the opposing flanks (11, 12) of the wall (9) of the clamping ring (8) to keep the clamping ring (8) in an expanded state before the pipe (2) is connected to the pipe connector (3), and
at least one outer collar (13) surrounding the fitting nipple (5) and the clamping ring (8) and comprising at least one through-hole (18) at the area of the clamping ring (8) for accessing the slot (10) in the clamping ring (8),
the method comprising inserting an opening head (26) of a tool (23) through the through-hole (18) in the outer collar (13) into the slot (10) in the clamping ring (8),
turning the tool (23) in relation to the pipe connector (3) for moving the opposing flanks (11, 12) of the wall (9) of the clamping ring (8) away from each other for opening the compression fitting between the fitting nipple (5) and the end (2') of the pipe (2).
